# FASCICULE DE BREVET EUROPEEN

(11) **EP 3 798 675 B1**
(45) Date de publication et mention de la délivrance du brevet: **10.11.2021**
(21) Numéro de dépôt: 20192376.0
(22) Date de dépôt: 24.08.2020
(51) Int. Cl.: G01S 13/86, G01S 17/933, G01S 7/48, G01S 17/86

(54) **PROCEDE ET SYSTEME DE DETECTION D'OBSTACLES FILAIRES POUR AERONEF**
VERFAHREN UND SYSTEM ZUR ERKENNUNG VON DRAHTARTIGEN HINDERNISSEN FÜR LUFTFAHRZEUG
METHOD AND SYSTEM FOR DETECTING WIRED OBSTACLES FOR AIRCRAFT

(30) Priorité: 27.09.2019 FR 1910682
(43) Date de publication de la demande: 31.03.2021
(73) Titulaire: Airbus Helicopters, 13725 Marignane Cedex (FR)
(72) Inventeur: THOMASSEY, Lionel, 13270 FOS SUR MER (FR)
(74) Mandataire: GPI Brevets

(56) Documents cités:
- JP-A- H10 123 245
- JP-A- 2002 087 394
- US-A1- 2014 177 928
- US-A1- 2015 364 047
- US-B1- 8 773 299

## Description

L'invention se situe dans le domaine technique des systèmes de détection d'obstacles pour aéronef.

La présente invention concerne un procédé de détection d'obstacles filaires par exemple de type câbles ou fils, ainsi qu'un système de détection d'obstacles filaires et un véhicule muni d'un tel système.

Un aéronef peut voler à basse altitude et donc à proximité d'un terrain et des obstacles pouvant se trouver sur le terrain.

Un aéronef peut alors être équipé d'un système de détection d'obstacles. Un système de détection d'obstacles pour un aéronef est par exemple connu sous l'acronyme *OWS* pour la désignation en langue anglaise « Obstacle Warning System ».

Un système de détection d'obstacles peut utiliser un détecteur de type télémètre *RADAR* ou *LASER* ou encore télémétrique par stéréoscopie.

Par exemple, un système de détection d'obstacles peut comporter un détecteur d'obstacles connu sous l'acronyme *LIDAR* pour la désignation en langue anglaise « LIght Détection And Ranging » ou sous l'acronyme LEDDAR pour « LED Détection And Ranging » ou encore un détecteur *RADAR*. Un tel détecteur d'obstacles comporte un émetteur, qui émet un signal de détection, et un récepteur, qui reçoit le signal de détection réfléchi par un obstacle. Une mesure du temps passé entre l'émission du signal de détection et la réception du signal réfléchi permet de déduire la distance à laquelle se trouve l'obstacle.

Un détecteur *RADAR* emploie par exemple des ondes radiophoniques alors qu'un détecteur *LIDAR* utilise un faisceau de lumière.

Un système de détection d'obstacles peut comporter au moins une caméra et un calculateur qui analyse les images captées afin de détecter un éventuel obstacle.

Ces méthodes et ces systèmes de détection d'obstacles sont efficaces pour détecter les obstacles volumineux tels que les reliefs du sol et les bâtiments. Il peut s'avérer par contre plus difficile de détecter des obstacles filaires tels qu'un câble électrique ou un câble de téléphérique par exemple.

Il est cependant intéressant d'être capable de détecter ces obstacles filaires ou tout du moins de savoir déterminer une zone à interdire de vol dans laquelle un obstacle filaire est susceptible de se trouver, et une zone sûre, exempte de tout obstacle. En effet, les obstacles filaires peuvent représenter un danger important pour les aéronefs, et en particulier pour les aéronefs à voilure tournante.

Par exemple, les documents CN 108805050 et CN 109543595 décrivent des méthodes de détection de câbles électriques basées sur une analyse d'une image de l'environnement, puis un affichage de chaque obstacle détecté pour alerter un pilote de l'aéronef. L'image de l'environnement est tout d'abord captée, puis est convertie en temps réel en une image en niveaux de gris. L'analyse automatique d'une telle image en niveaux de gris et l'extraction des câbles éventuels sont réalisées par exemple, selon le document CN 109543595, par l'application d'un réseau neuronal et d'une transformation de Hough.

Le document FR 2957447 décrit une méthode permettant de voler à basse altitude à l'aide d'un aéronef en prenant en compte la présence éventuelle d'un obstacle filaire. Cette méthode détermine un volume sécurisé au dessus d'un terrain non sécurisé et en particulier d'un point sommital de ce terrain non sécurisé. Ce point sommital est considéré comme susceptible d'être un pylône pouvant supporter un câble. De la sorte, le volume sécurisé prend en compte la présence éventuelle de câbles s'étendant à partir de ce point sommital du relief non sécurisé.

De plus, le document US 8773299 décrit un système et un procédé de détection de fils utilisant un radar dans un aéronef. Une ou plusieurs structures verticales, susceptibles d'être des pylônes, peuvent être détectées par le radar et un emplacement potentiel de câbles reliant les structures verticales peut être déterminé par le système de détection. Le système de détection peut vérifier l'existence de câbles au niveau de cet emplacement potentiel.

L'arrière plan technologique de l'invention comporte également les documents, US 2015/0364047, US 2014/0177928, JP H10123245 et JP 2002-087394.

La présente invention a alors pour objet de proposer un procédé et un système de détection d'obstacles filaires permettant de s'affranchir des limitations mentionnées ci-dessus et visant à optimiser la détection et la signalisation des obstacles filaires potentiels.

Un obstacle filaire peut être par exemple un câble électrique, un câble de téléphérique ou encore un fil quelconque. Par la suite et par souci de simplification, le terme « câble » est utilisé pour désigner un obstacle filaire quelle que soit sa forme et ses dimensions.

La présente invention concerne tout d'abord un procédé de détection d'obstacles filaires destiné à un aéronef. Cet aéronef comporte par exemple au moins un dispositif de détection.

Le procédé de détection d'obstacles filaires selon l'invention est remarquable en ce qu'il comporte les étapes suivantes :
- détection d'au moins un pylône dans l'environnement de l'aéronef,
- identification d'une famille de pylônes à laquelle correspond ledit au moins un pylône détecté parmi une base de données de familles de pylônes,
- caractérisation d'au moins un câble supporté par ledit au moins un pylône détecté, à partir de la base de données, et
- détermination d'une zone interdite susceptible de comporter ledit au moins un pylône détecté et ledit au moins un câble et d'une zone sécurisée ne comportant ni ledit au moins un pylône, ni ledit au moins un câble.

Un câble est généralement supporté par un pylône qui peut être de formes diverses. Un pylône est généralement de dimensions importantes, à savoir qu'il est haut, large et/ou volumineux, et est donc plus facilement visible et/ou détectable qu'un câble, quelle que soit la méthode de détection utilisée et quel que soit l'environnement, par exemple en présence de brouillard ou de pluie, ou bien selon les saisons qui peuvent entraîner des changement de densité et de couleurs de la végétation. Un pylône de part ses dimensions peut ainsi permettre d'anticiper la présence éventuelle d'un câble ou de plusieurs câbles et le cas échéant la réalisation d'une manœuvre d'évitement de ce(s) câble(s).

Dès lors, le procédé selon l'invention permet avantageusement de détecter dans un premier temps au moins un pylône susceptible de supporter un câble et de délimiter la zone dans laquelle peuvent se trouver le ou les câbles supportés par le pylône ainsi que les zones où se trouve cet au moins un pylône détecté et éventuellement les autres pylônes supportant également ce ou ces câbles.

Ainsi, le procédé permet avantageusement de déterminer une zone interdite susceptible de comporter au moins un pylône et au moins un câble et donc à éviter lors du vol de l'aéronef. Le procédé permet aussi de déterminer une zone sécurisée ne comportant aucun pylône et aucun câble, et donc à éventuellement utiliser pour un vol sécurisé de l'aéronef.

La zone interdite peut être formée par une ou plusieurs sous-zones, par exemple une sous-zone associée à respectivement à chaque pylône détecté et une sous-zone associée au(x) câble(s) supporté(s) par chaque pylône détecté.

La zone sécurisée peut aussi être formée par une ou plusieurs sous-zones, par exemple une sous-zone située au-dessus du ou des câbles, une sous-zone située à l'extérieur de l'espace formé par deux pylônes consécutifs ainsi qu'une sous-zone située entre ces deux pylônes consécutifs et en-dessous du ou des câbles.

En outre, le procédé selon l'invention peut comporter une étape d'affichage des zones interdite et sécurisée sur au moins un dispositif de visualisation de sorte à alerter un opérateur, par exemple un pilote de l'aéronef, de la présence potentiel d'au moins un câble et d'au moins un pylône. De la sorte, le procédé selon l'invention peut indiquer à un opérateur la zone interdite dans laquelle peuvent se trouver au moins un pylône et au moins un câble ainsi que la zone sécurisée dans laquelle l'aéronef peut évoluer en sécurité sans risque de rentrer en contact avec un câble ou un pylône. Les zones interdite et sécurisée peuvent être affichées de façon superposée à une image du paysage extérieur à l'aéronef.

L'aéronef peut embarquer le pilote et comporter un tel dispositif de visualisation afin d'informer le pilote des zones interdite et sécurisée.

Le pilote de l'aéronef peut aussi être déporté à l'extérieur de l'aéronef, par exemple dans une station de pilotage. Dans ce cas, l'aéronef peut être désigné par le terme « drone ». Le dispositif de visualisation est alors situé dans la station de pilotage. La station de pilotage peut se trouver au sol, dans un navire ou bien dans un autre aéronef par exemple. Le pilote de l'aéronef peut également être déporté et piloter l'aéronef à vue à l'aide d'une télécommande, l'aéronef pouvant par moment sortir du champ de vison du pilote, en étant par exemple derrière un bâtiment ou encore trop loin pour être visible.

L'aéronef peut également évoluer de façon autonome ou automatique selon la réglementation nationale en vigueur, à savoir sans être dirigé par un pilote humain, embarqué ou non embarqué, un pilote automatique commandant le vol de l'aéronef, selon le cas échéant une trajectoire initiale prédéterminée. Le pilote automatique peut par exemple mettre en œuvre un procédé de vol automatique de l'aéronef en utilisant alors lui-même le procédé de détection d'obstacles filaires afin de prendre en compte les obstacles filaires au travers des zones interdite et sécurisée. Le pilote automatique peut donc, en limitant les excursions spatio-temporelles de l'aéronef, faire dévier l'aéronef de la trajectoire initiale prédéterminée pour éviter un danger représenté par un pylône et/ou un obstacle filaire.

Par ailleurs, la base de données utilisée par le procédé selon l'invention a été préalablement créée et mémorisée. La base de données comporte les caractéristiques de plusieurs familles de pylônes connues ainsi que les caractéristiques des câbles auxquels peut être reliée chaque famille de pylônes. La base de données peut aussi comporter des règles d'un système expert, regroupant par exemple des règles de conception et d'installation de pylônes et de câbles utilisées par exemple pour la conception et la fabrication de pylônes et de câbles. En outre, cette base de données peut être mise à jour en fonction des évolutions possibles de pylônes et/ou de câbles et des changements de règles de conception ou de normes relatives aux pylônes et aux câbles.

Le procédé de détection d'obstacles filaires selon l'invention peut de plus comprendre une ou plusieurs des caractéristiques qui suivent, prises seules ou en combinaison.

Selon un aspect, l'étape de détection d'au moins un pylône dans l'environnement de l'aéronef peut comporter les sous-étapes suivantes :
- création d'une image de l'environnement de l'aéronef, par l'intermédiaire d'un dispositif de détection de l'aéronef,
- analyse de l'image de l'environnement de l'aéronef, par exemple avec un calculateur, et
- identification d'au moins un pylône contenu dans l'image de l'environnement, par exemple avec ledit calculateur.

La sous-étape de création d'une image de l'environnement de l'aéronef peut être effectuée par une émission d'ondes et une réception de ces ondes renvoyées par un obstacle. La sous-étape de création d'une image de l'environnement de l'aéronef comporte alors par exemple une étape d'émission d'ondes et une étape de réception de ces ondes renvoyées par un obstacle. Les ondes peuvent être des ondes radiophoniques, le dispositif de détection comportant par exemple un détecteur de type *RADAR*, ou être des ondes lumineuses, le dispositif de détection comportant par exemple un détecteur de type *LIDAR ou LEDDAR*.

La sous-étape de création d'une image de l'environnement de l'aéronef peut également être effectuée par une capture optique d'une image de l'environnement, dans le domaine visible pour l'homme et/ou dans le domaine infrarouge par exemple. Le dispositif de détection comporte par exemple une caméra ou un appareil photographique. La sous-étape de création d'une image de l'environnement de l'aéronef comporte alors une étape de capture optique d'une image de l'environnement.

La sous-étape de création d'une image de l'environnement de l'aéronef peut aussi être effectuée par une fusion des deux sous-étapes citées précédemment, à savoir par une émission d'ondes et une réception de ces ondes renvoyées par un obstacle et par une capture optique d'une image de l'environnement.

Les sous-étapes d'analyse de l'image de l'environnement de l'aéronef et d'identification d'au moins un pylône contenu dans l'image de l'environnement peuvent être réalisées par l'intermédiaire d'un calculateur. Le calculateur peut utiliser des méthodes connues, telles que des méthodes de reconnaissance de formes et d'objets, lors de ces sous-étapes afin de détecter la présence d'au moins un pylône dans l'image de l'environnement de l'aéronef.

Par exemple, lors des étapes d'analyse et d'identification d'au moins un pylône contenu dans l'image de l'environnement, le procédé selon l'invention peut mettre en place un processus d'apprentissage désigné par exemple « deep learning » en langue anglaise. Un tel processus d'apprentissage permet au calculateur exécutant le procédé selon l'invention d'apprendre à détecter et à identifier un pylône, quelle que soit sa forme ou sa famille, parmi les nombreux éléments visibles dans l'image de l'environnement de l'aéronef, notamment sous différents angles de vue et à différentes distances afin de faciliter la détection de pylônes.

De même, lors de l'étape d'identification d'une famille de pylônes à laquelle correspond ledit au moins un pylône détecté parmi une base de données de familles de pylônes, le procédé selon l'invention peut également mettre en place un tel processus d'apprentissage de type « deep learning » afin d'identifier la famille du pylône détecté.

L'étape de détection d'au moins un pylône dans l'environnement de l'aéronef et l'étape d'identification d'une famille de pylônes à laquelle correspond ledit au moins un pylône détecté peuvent être réalisées de façon séquentielle, l'identification étant effectué après la détection. Ces étapes de détection et d'identification peuvent également être réalisées de façon simultanée, l'identification étant réalisée sensiblement en même temps que la détection.

Un tel processus d'apprentissage utilise par exemple des réseaux de neurones auxquels sont associés divers algorithmes connus sous les acronymes *LSTM* pour la désignation en langue anglaise « Long Short-Term Memory » et *CNN* pour « Convolutional Neural Network » et des logiciels de traitement d'images tels que le logiciel « OpenCV » par exemple.

En outre, le calculateur peut comporter au moins un processeur et au moins une mémoire, au moins un circuit intégré, au moins un système programmable ou bien au moins un circuit logique, ces exemples ne limitant pas la portée donnée à l'expression « calculateur ». Ce calculateur peut être intégré à l'aéronef ou bien à la station de pilotage le cas échéant. Le calculateur peut être un calculateur dédié à la réalisation du procédé selon l'invention ou être un calculateur partagé avec d'autres fonctions de l'aéronef et être par exemple intégré à un système avionique de l'aéronef.

Ce calculateur peut également être utilisé par le procédé selon l'invention pour la création de l'image de l'environnement de l'aéronef à partir des informations fournies par le dispositif de détection.

La mémoire peut par exemple stocker une ou plusieurs bases de données, en particulier la base de données de familles de pylônes ainsi qu'un ou plusieurs programmes ou sous-programmes d'ordinateurs, par exemple sous la forme d'algorithmes, afin de réaliser le procédé selon l'invention.

De plus, l'étape d'identification d'une famille de pylônes peut comporter les sous-étapes suivantes :
- comparaison dudit au moins un pylône détecté dans l'image de l'environnement de l'aéronef avec la base de données de familles de pylônes, et
- sélection de la famille de pylônes à laquelle correspond ledit au moins un pylône détecté dans l'image.

La sous-étape de comparaison peut être réalisée par l'intermédiaire du calculateur et utilise la base de données de familles de pylônes.

De la sorte, chaque pylône détecté dans l'image de l'environnement de l'aéronef est comparé avec chaque famille de pylônes de la base de données afin de déterminer et de sélectionner la famille de chaque pylône détecté dans l'image en vue d'en déduire les zones potentielles de présence d'un ou plusieurs câbles. La sous-étape de sélection peut également être réalisée par l'intermédiaire du calculateur.

En outre, si aucune famille de pylônes de la base de données ne correspond au pylône détecté, le procédé peut avantageusement associer à ce pylône détecté la famille de pylônes la plus proche de ce pylône détecté. Le procédé peut par exemple mettre en œuvre un algorithme qui, par analogie avec tous les types de pylônes de la base de données, associe au pylône détecté la famille de pylônes ayant la typologie la plus proche de celle du pylône détecté.

Cette algorithme peut analyser notamment, les caractéristiques des pylônes, par exemple si le pylône est vertical et en bois, ou bien en structure métallique en treillis, le nombre de pieds du pylône, le nombre de bras susceptibles de porter un câble, la largeur et la hauteur de la section où se situe chaque bras. La présence d'isolateurs permet de déterminer qu'il s'agit d'un pylône d'une ligne électrique et le nombre d'isolateurs peut contribuer à identifier la famille du pylône. Une forme spécifique en sommet de pylône et/ou la présence de cabines permet de déterminer qu'il s'agit d'un pylône d'une ligne de téléphérique.

Lors de l'étape de caractérisation d'au moins un câble supporté par chaque pylône détecté dans l'image de l'environnement, au moins une caractéristique dudit au moins un câble supporté par au moins un pylône détecté peut être déterminée à partir de la base de données et les règles du système expert qu'elle peut comporter. Cette au moins une caractéristique dudit au moins un câble peut être une des caractéristiques suivante :
- une distance entre deux pylônes consécutifs reliés par au moins un câble, les deux pylônes consécutifs ayant été détectés dans l'environnement de l'aéronef,
- une distance entre deux pylônes consécutifs reliés par au moins un câble, les deux pylônes consécutifs étant un pylône détecté et un autre pylône relié à ce pylône détecté par au moins un câble, cet autre pylône n'ayant pas été détecté,
- un nombre de câbles entre deux pylônes consécutifs,
- une catégorie dudit au moins un câble, et
- un rayon de courbure dudit au moins un câble entre deux pylônes consécutifs.

En effet, la base de données des familles de pylônes peut également comporter ces caractéristiques de chaque câble susceptible d'être supporté par chaque famille de pylônes. Parmi les catégories de câbles, on peut citer le câble téléphonique gainé, le câble électrique multi-torons métalliques ou encore le câble de téléphérique par exemple.

La base de données des familles de pylônes comporte par exemple la catégorie de chaque câble selon la famille de pylônes, le nombre de câbles susceptibles d'être supportés par chaque famille de pylônes et les distances entre deux pylônes consécutifs supportant le ou les mêmes câbles selon la famille de pylônes. Cette base de données peut également comporter la valeur du rayon de courbure de chaque câble entre deux pylônes consécutifs selon la famille de pylônes, ce rayon de courbure permettant de déterminer jusqu'à quelle hauteur, prise verticalement, descend le câble par rapport à son point d'accrochage sur le pylône, et d'en déduire la hauteur de la sous zone de la zone interdite associée à ce câble. Cette hauteur entre un point d'accrochage du câble sur un pylône et son point le plus bas peut aussi être une caractéristique d'un câble.

Deux pylônes consécutifs sont deux pylônes reliés entre eux par au moins un même câble. Un autre pylône est un pylône relié par au moins un câble à un pylône détecté par le procédé lors de l'étape de détection dans l'environnement de l'aéronef, cet autre pylône étant non visible dans le champ de détection en amont et en aval du pylône détecté et, de fait, non détecté. Cependant, après identification de la famille du pylône détecté, la distance entre ce pylône détecté et cet autre pylône peut avantageusement être estimée à partir de la base de données et les règles du système expert qu'elle peut comporter avant même que cet autre pylône soit dans le champ de détection du dispositif de détection embarqué dans l'aéronef. Une position d'au moins un autre pylône par rapport à un pylône détecté peut ainsi avantageusement être estimée par le procédé selon l'invention.

Ainsi, le procédé permet avantageusement de déterminer une zone interdite susceptible de comporter au moins un pylône et au moins un câble et donc à éviter lors du vol de l'aéronef. Le procédé permet aussi de déterminer une zone sécurisée ne comportant aucun pylône et aucun câble, et donc à éventuellement utiliser pour un vol sécurisé de l'aéronef.

La position d'au moins un autre pylône par rapport à un pylône détecté pouvant être estimée, le procédé selon l'invention peut comporter une étape supplémentaire d'estimation de la position d'au moins un autre pylône par rapport à un pylône détecté. Ensuite, une fois qu'un autre pylône est effectivement détecté par le procédé, cet autre pylône est remplacé par le pylône détecté.

En outre, le procédé selon l'invention peut comporter une étape d'affichage des zones interdite et sécurisée sur au moins un dispositif de visualisation de sorte à alerter un opérateur, par exemple un pilote de l'aéronef, de la présence potentiel d'au moins un câble et d'au moins un pylône. De la sorte, le procédé selon l'invention peut indiquer à un opérateur la zone interdite dans laquelle peuvent se trouver au moins un pylône et au moins un câble ainsi que la zone sécurisée dans laquelle l'aéronef peut évoluer en sécurité sans risque de rentrer en contact avec un câble ou un pylône.

Le procédé selon l'invention peut également comporter une étape d'estimation et d'affichage d'une position prédite de l'aéronef vis-à-vis des zones interdite et sécurisée sur ledit au moins un dispositif de visualisation. Cette position prédite de l'aéronef est estimée en fonction de la trajectoire courante de l'aéronef. Cette position prédite de l'aéronef est affichée sous la forme par exemple d'un carré, d'une croix ou d'un symbole représentant l'aéronef et permet au pilote de visualiser sa trajectoire vis-à-vis des zones interdite et sécurisée.

En outre, lors de l'étape de détermination des zones interdite et sécurisée, la zone interdite peut comporter au moins deux pylônes et chaque câble supporté par lesdits au moins deux pylônes. Cette zone interdite peut être définie avec une première distance de sécurité vis à vis de chaque pylône et de chaque câble. La zone sécurisée ne comporte pas quant à elle lesdits au moins deux pylônes et ne comporte aucun câble. Cette zone sécurisée peut être définie avec une seconde distance de sécurité vis à vis de chaque pylône et de chaque câble. La zone sécurisée peut également être définie avec une seconde distance de sécurité vis à vis de la zone interdite. La première distance et la seconde distance correspondent à des marges de sécurité vis-à-vis de la position potentielle de chaque pylône et de chaque câble.

Chaque zone interdite ou sécurisée peut comporter des formes sensiblement identiques respectivement à chaque pylône et à chaque câble en prenant en compte son rayon de courbure.

Chaque zone interdite ou sécurisée peut aussi comporter des formes rectangulaires respectivement autour de chaque pylône et de chaque câble, tout en respectant la distance de sécurité.

La zone interdite peut aussi être définie au plus près de chaque pylône et de chaque câble par l'enveloppe déterminée lors de la détection et l'identification des pylônes autour de chaque pylône et de chaque câble. Les dimensions de la zone interdite peuvent alors être définies en fonction d'un degré de confiance établie lors de la détection et de l'identification du pylône détecté par rapport à la famille de pylône identifiée. Le degré de confiance correspond à un pourcentage de certitude sur la reconnaissance de la famille du pylône établi par le processus de reconnaissance d'objets.

La première distance et la seconde distance peuvent être déterminées par une méthode de logique floue, désigné également « fuzzy logic » en langue anglaise en fonction de différents critères.

Deux critères peuvent être liés à l'aéronef et être par exemple la vitesse d'avancement de l'aéronef et la distance entre d'une part l'aéronef et d'autre part un pylône ou un câble. Cette vitesse d'avancement et cette distance peuvent donc varier lors du vol de l'aéronef. De plus, ces deux critères, à savoir la vitesse d'avancement de l'aéronef et la distance entre l'aéronef et un pylône ou un câble, peuvent être combinés pour former un autre critère de délai avant un possible impact de l'aéronef avec un pylône ou un câble. Ce délai avant ce possible impact peut être désigné par l'acronyme *TBI* pour la désignation en langue anglaise « Time Before Impact ».

Un autre critère peut être le degré de confiance sur la détection et l'identification dudit au moins un pylône.

Une zone de sécurité peut aussi être définie lors de l'étape de détermination par la première distance de sécurité vis à vis de chaque pylône et de chaque câble. La zone de sécurité peut aussi être définie lors de l'étape de détermination par la première distance de sécurité vis à vis de la zone interdite. De la sorte, la zone de sécurité couvre des zones non couvertes par la zone interdite et par la zone sécurisée. La zone de sécurité peut être formée par une ou plusieurs sous-zones, par exemple une sous-zone étant formée par chaque espace située entre une zone interdite et une zone sécurisée.

Cette zone de sécurité définit ainsi une zone susceptible de ne comporter aucun pylône et aucun câble, mais située à proximité d'un pylône ou d'un câble. Cette zone de sécurité est donc une zone à éviter lors du vol de l'aéronef.

La zone de sécurité peut également être affichée sur au moins un dispositif de visualisation lors de l'étape d'affichage des zones interdite et sécurisée afin de montrer sa localisation au pilote de l'aéronef.

Selon un autre aspect, le procédé peut comporter une étape supplémentaire d'évolution des zones interdite et sécurisée et de la zone de sécurité le cas échéant. Au cours de cette étape supplémentaire d'évolution des zones interdite et sécurisée et de la zone de sécurité le cas échéant, les dimensions des zones interdite et sécurisée et de la zone de sécurité le cas échéant peuvent être modifiées, en modifiant par exemple les valeurs des première et seconde distances de sécurité en fonction par exemple des différents critères évoqués précédemment, à savoir la vitesse d'avancement de l'aéronef et la distance entre d'une part l'aéronef et d'autre part un pylône ou un câble, le délai avant ce possible impact *TBI*, le degré de confiance sur la détection et l'identification dudit au moins un pylône.

Chacun de ces critères peut faire évoluer de façon individuelle et indépendante les valeurs des première et seconde distances de sécurité et, par suite, les dimensions des zones interdite et sécurisée. La première distance de sécurité et la seconde distance de sécurité évoluent donc en permanence en fonction des variations de ces critères. Des lois d'évolution, par exemple distinctes pour chaque critère, régissent alors l'évolution des première et seconde distances de sécurité en fonction de la variation de chaque critère.

Ces critères peuvent également être combinés afin de faire évoluer les première et seconde distances de sécurité et, par suite, les dimensions des zones interdite ou de sécurité et de la zone sécurisée. Dans ce cas, une matrice de décision peut par exemple être définie pour chaque combinaison envisagée de critères, la dimension de cette matrice étant le nombre de critères combinés. Par exemple, une matrice combinant les critères de la vitesse d'avancement de l'aéronef, du délai avant un possible impact *TBI* et du degré de confiance sur la détection est une matrice à trois dimensions représentée par un parallélépipède ou par un cube. Des lois d'évolution sont alors associées à chaque case de la matrice de décision afin de régir l'évolution des première et seconde distances de sécurité en fonction de la variation combinée de ces critères.

La matrice de décision peut aussi être formée par un hypercube à *n* dimensions lorsque *n* critères sont pris en compte.

Cette étape supplémentaire d'évolution des zones interdite et sécurisée utilise de préférence une méthode de logique floue en fonction des valeurs d'un seul critère ou d'une combinaison de plusieurs critères. L'utilisation de la logique floue permet de déterminer des valeurs des première et seconde distances de sécurité, et par suite, les dimensions de la zone interdite ou de sécurité et de la zone sécurisée, à partir des critères qui ne sont pas binaires mais qui peuvent évoluer de façon continue.

La présente invention vise également un système de détection d'obstacles filaires configuré pour mettre en œuvre le procédé de détection d'obstacles filaires précédemment décrit. Ce système de détection comporte :
- au moins un dispositif de détection,
- au moins un calculateur, et
- au moins un dispositif de visualisation.

Le dispositif de détection peut comporter au moins une caméra optique, un détecteur d'obstacles de type *LIDAR* ou *LEDDAR* et/ou un détecteur d'obstacles de type *RADAR.* Le calculateur peut comporter au moins un processeur et au moins une mémoire, au moins un circuit intégré, au moins un système programmable ou bien au moins un circuit logique par exemple.

La présente invention vise aussi un aéronef comportant un tel système de détection.

Le calculateur du système de détection peut être dédié à la réalisation du procédé de détection d'obstacles filaires ou bien être partagé avec d'autres fonctions de l'aéronef et être par exemple intégré à un système avionique de l'aéronef.

En outre, au moins un dispositif de visualisation du système de détection peut être déporté sur une station de pilotage communiquant avec l'aéronef. Dans ce cas, l'aéronef comporte un dispositif de communication coopérant avec un autre dispositif de communication situé dans la station de pilotage et relié à cet au moins un dispositif de visualisation déporté. Cette configuration est utilisée dans le cas où l'aéronef est piloté à distance depuis la station de pilotage. La station de pilotage peut se trouver au sol, sur un navire ou bien dans un autre aéronef par exemple.

De même, le calculateur peut être déporté dans la station de pilotage.

La présente invention vise enfin un ensemble de détection d'un obstacle filaire comportant une station de pilotage et un aéronef.

L'ensemble de détection d'un obstacle filaire comporte un système de détection d'un obstacle filaire tel que précédemment décrit. Par exemple, l'aéronef comporte ledit au moins un dispositif de détection du système de détection d'un obstacle filaire et un premier dispositif de communication alors que la station de pilotage comporte ledit au moins un calculateur et ledit au moins un dispositif de visualisation du système de détection d'un obstacle filaire ainsi qu'un second dispositif de communication. Le premier dispositif de communication coopère avec le second dispositif de communication afin d'échanger d'une part des informations captées par ledit au moins un dispositif de détection et d'autre part des données de navigation permettant par exemple le pilotage de l'aéronef à distance.

L'invention et ses avantages apparaîtront avec plus de détails dans le cadre de la description qui suit avec des exemples donnés à titre illustratif en référence aux figures annexées qui représentent :
- la figure 1, un aéronef,
- la figure 2, un ensemble de détection d'un obstacle filaire,
- la figure 3, différentes familles de pylônes,
- les figures 4 et 5, deux pylônes et un ou plusieurs câbles,
- les figures 6 à 8, des représentations des zones interdite et sécurisée, et
- la figure 9, une matrice de décision.

Les éléments présents dans plusieurs figures distinctes sont affectés d'une seule et même référence.

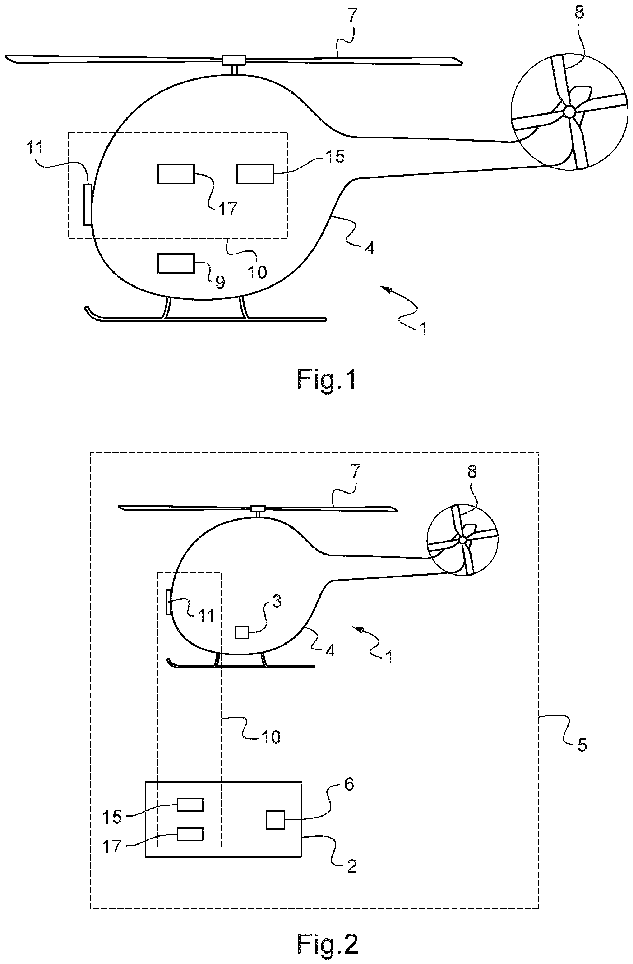

[Fig 1] L'aéronef 1 représenté sur la figure 1 comporte un fuselage 4, un train d'atterrissage à patins, un rotor principal 7 agencé au dessus du fuselage 4, un rotor arrière anticouple 8 agencé sur une poutre de queue de l'aéronef 1 ainsi qu'un système de détection 10 d'obstacles filaires et un pilote automatique 9. Le système de détection 10 comporte au moins un dispositif de détection 11, au moins un calculateur 15 et au moins un dispositif de visualisation 17.

Le dispositif de détection 11 peut comprendre une caméra, un détecteur d'obstacles de type *LIDAR* ou *LEDDAR* et/ou un détecteur d'obstacles de type *RADAR.*

Le calculateur 15 peut comporter au moins un processeur et au moins une mémoire, au moins un circuit intégré, au moins un système programmable ou bien au moins un circuit logique par exemple.

L'aéronef 1 représenté sur la figure 1 peut aussi comporter un pilote embarqué (non représenté sur la figure) pilotant l'aéronef 1.

L'aéronef 1 peut également évoluer de façon automatique, le pilote automatique 9 commandant seul, sans intervention humaine, le vol de l'aéronef 1.

[Fig 2] L'ensemble 5 de détection d'un obstacle filaire représenté sur la figure 2 comporte une station de pilotage 2 déporté et un aéronef 1 ainsi qu'un système de détection 10 d'obstacles filaires muni d'un dispositif de détection 11, d'un calculateur 15 et d'un dispositif de visualisation 17. L'aéronef 1 comporte le dispositif de détection 11 du système de détection 10 et un premier dispositif de communication 3. La station de pilotage 2 comporte le calculateur 15 et le dispositif de visualisation 17 du système de détection 10 ainsi qu'un second dispositif de communication 6.

L'aéronef 1 ne comporte dans ce cas aucun pilote humain, le pilote humain se trouvant dans la station de pilotage 2 afin de piloter l'aéronef 1 à distance. Le premier dispositif de communication 3 coopère alors avec le second dispositif de communication 6 afin d'échanger notamment des données de navigation.

De plus, le premier dispositif de communication 3 coopère avec le second dispositif de communication 6 afin de transmettre des informations captées par le dispositif de détection 11 au calculateur 15.

Le calculateur 15 peut également se trouver dans l'aéronef 1, la station de pilotage 2 ne comportant pas de calculateur. Dans ce cas, les résultats obtenus par le calculateur 15 peuvent être transférés de l'aéronef 1 à la station de pilotage 2 par l'intermédiaire du premier dispositif de communication 3 et du second dispositif de communication 6.

Dans tous les cas, le système de détection 10 d'obstacles filaires est configuré pour mettre en œuvre un procédé de détection d'obstacles filaires destiné à un aéronef 1. Ce procédé de détection d'obstacles filaires permet dans un premier temps la détection d'au moins un pylône dans l'environnement de l'aéronef 1 et d'en déduire une localisation probable du câble ou des câbles supportés par chaque pylône détecté ainsi qu'éventuellement la position d'autres pylônes non détectés.

Dans ce but, ce procédé de détection d'obstacles filaires comporte tout d'abord une étape de détection d'au moins un pylône dans l'environnement de l'aéronef 1.

Cette étape de détection d'au moins un pylône dans l'environnement de l'aéronef 1 peut se décomposer en plusieurs sous-étapes et comporter par exemple une sous-étape de création d'une image de l'environnement de l'aéronef 1, une sous-étape d'analyse de l'image de l'environnement de l'aéronef 1 et une sous-étape d'identification d'au moins un pylône contenu dans l'image de l'environnement.

La sous-étape de création d'une image de l'environnement de l'aéronef 1 est effectuée par l'intermédiaire du dispositif de détection 11 aidé éventuellement par le calculateur 15.

Une telle image de l'environnement peut être créée par une émission d'ondes par exemple radiophoniques ou lumineuses et une réception de ces ondes renvoyées par tout obstacle de l'environnement de l'aéronef 1, lorsque le dispositif de détection 11 est de type *RADAR* ou bien de type *LIDAR* ou *LEDDAR.*

Une telle image de l'environnement peut aussi être captée par une caméra que comporte alors le dispositif de détection 11.

Le calculateur 15 permet la réalisation des sous-étapes d'analyse de l'image de l'environnement de l'aéronef et d'identification d'au moins un pylône 51 contenu dans l'image de l'environnement, en utilisant par exemple des méthodes connues d'analyse d'images utilisant éventuellement un processus d'apprentissage de type « deep learning ».

Le procédé de détection d'obstacles filaires comporte ensuite une étape d'identification d'une famille de pylônes à laquelle correspond chaque pylône détecté précédemment, chaque famille de pylônes étant contenue dans une base de données de familles de pylônes. Cette base de données est accessible par l'intermédiaire du calculateur 15, en étant par exemple stockée dans une mémoire du calculateur 15 ou bien dans une mémoire reliée au calculateur 15.

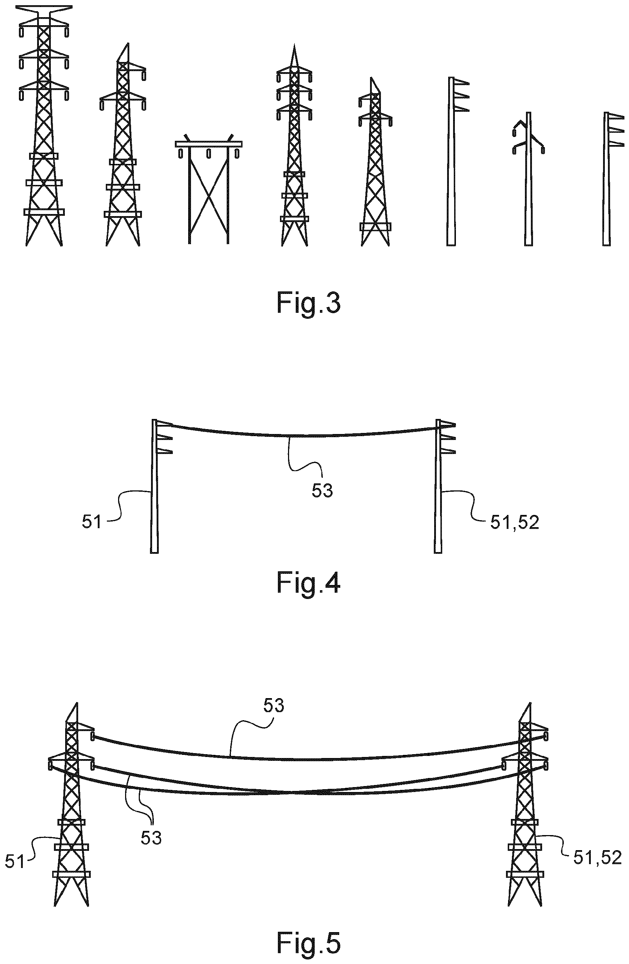

[Fig 3] Des exemples de pylônes représentatifs respectivement de familles de pylônes distinctes sont représentés sur la figure 3.

[Fig 4] La base de données de familles de pylônes comporte également des règles d'un système expert issues en particulier de la conception et de la fabrication de pylônes et de câbles. Ces règles traduisent des caractéristiques de chaque câble 53 relié à un pylône 51 détecté, par exemple le nombre de câble relié à un pylône 51 détecté, ces caractéristiques pouvant être fonction de la famille de ce pylône 51 détecté. Par exemple, la figure 4 représente un seul câble 53 reliant deux pylônes 51,52 consécutifs.

[Fig 5] Selon un autre exemple, la figure 5 représente trois câbles 53 reliant deux pylônes 51,52 consécutifs d'une famille différente que précédemment. Les câbles 53 sont plus pendants que le câble 53 de la figure 4 et la zone potentielle couverte par les câbles 53 est ainsi plus haute que pour le câble 53 de la figure 4.

L'étape d'identification de la famille de pylône du pylône 51 détecté peut être réalisée par des méthodes connues d'analyse d'images en utilisant éventuellement un processus d'apprentissage de type « deep learning » afin d'identifier la famille du pylône détecté. Cette étape d'identification de la famille de pylône du pylône 51 détecté peut se décomposer en plusieurs sous-étapes et comporter par exemple une sous-étape de comparaison de chaque pylône 51 détecté dans l'image avec les pylônes contenus la base de données de familles de pylônes et une sous-étape de sélection de la famille de pylônes à laquelle correspond chaque pylône 51 détecté dans l'image.

La sous-étape de comparaison est réalisée par l'intermédiaire du calculateur 15 en utilisant les informations de la base de données de familles de pylônes. De la sorte, chaque pylône 51 détecté dans l'image de l'environnement de l'aéronef est comparé avec chaque famille de pylônes de la base de données afin de déterminer et de sélectionner la famille de chaque pylône 51détecté dans l'image de l'environnement de l'aéronef. Un degré de confiance correspondant à un pourcentage de confiance de la détection de la famille de pylône correspondant réellement au pylône 51 détecté est déterminé simultanément à cette d'identification de la famille du pylône détecté.

Le procédé de détection d'obstacles filaires comporte aussi une étape de caractérisation d'au moins un câble 53 supporté par chaque pylône 51 détecté. Une ou plusieurs caractéristiques d'au moins un câble 53 supporté sont déterminées à partir de la base de données et des règles du système expert qu'il comporte. En effet, la base de données comporte des caractéristiques du ou des câbles susceptibles d'être supportés par un pylône et associées à chaque famille de pylônes.

Une caractéristique d'un câble 53 peut être une distance entre deux pylônes 51,52 consécutifs reliés par au moins un câble 53. Ces deux pylônes 51,52 consécutifs peuvent avoir été détectés dans l'environnement de l'aéronef 1, ledit au moins un pylône 51 détecté dans l'environnement de l'aéronef 1 comportant ces deux pylônes 51,52 consécutifs.

Ces deux pylônes 51,52 consécutifs peuvent aussi être représentés par un pylône 51 détecté et un autre pylône 52 relié à ce pylône 51 détecté par au moins un câble 53, cet autre pylône 52 n'ayant pas encore été détecté. En effet, cet autre pylône 52 peut être hors du champ de détection du dispositif de détection 11 ou bien être au moins partiellement masqué par un arbre, un bâtiment ou bien un autre élément de l'environnement de sorte à empêcher sa détection. Ledit au moins un pylône 51 détecté dans l'environnement de l'aéronef 1 comporte alors ce seul pylône 51 détecté.

Cependant, la position d'au moins un autre pylône 52 par rapport à ce pylône 51 détecté peut être estimée. Le procédé selon l'invention peut alors comporter une étape supplémentaire d'estimation de la position d'au moins un autre pylône 52 par rapport à un pylône 51 détecté. Ensuite, une fois que cet autre pylône 52 est effectivement détecté par le dispositif de détection 11, la position réelle du pylône lorsqu'il est détecté prend le dessus sur la position estimée.

Une caractéristique d'un câble peut aussi être un nombre de câbles 53 entre deux pylônes 51,52 consécutifs, une catégorie de chaque câble 53 ou encore un rayon de courbure de chaque câble 53 entre deux pylônes 51,52 consécutifs. Une caractéristique d'un câble peut aussi être une hauteur du câble 53, cette hauteur étant égale à la distance verticale entre un point d'accrochage de ce câble 53 sur un pylône 51,52 et son point le plus bas.

Par exemple, la figure 4 représente un seul câble 53 avec un important rayon de courbure reliant deux pylônes 51,52 consécutifs.

Selon un autre exemple, la figure 5 représente trois câbles 53 reliant deux pylônes 51,52 consécutifs d'une famille différente que précédemment, les trois câbles 53 ayant un rayon de courbure plus faible que précédemment.

Le procédé de détection d'obstacles filaires comporte enfin une étape de détermination d'une zone interdite 21 susceptible de comporter ledit au moins un pylône 51 et ledit au moins un câble 53 et d'une zone sécurisée 23 ne comportant ni ledit au moins un pylône 51 ni ledit au moins un câble 53.

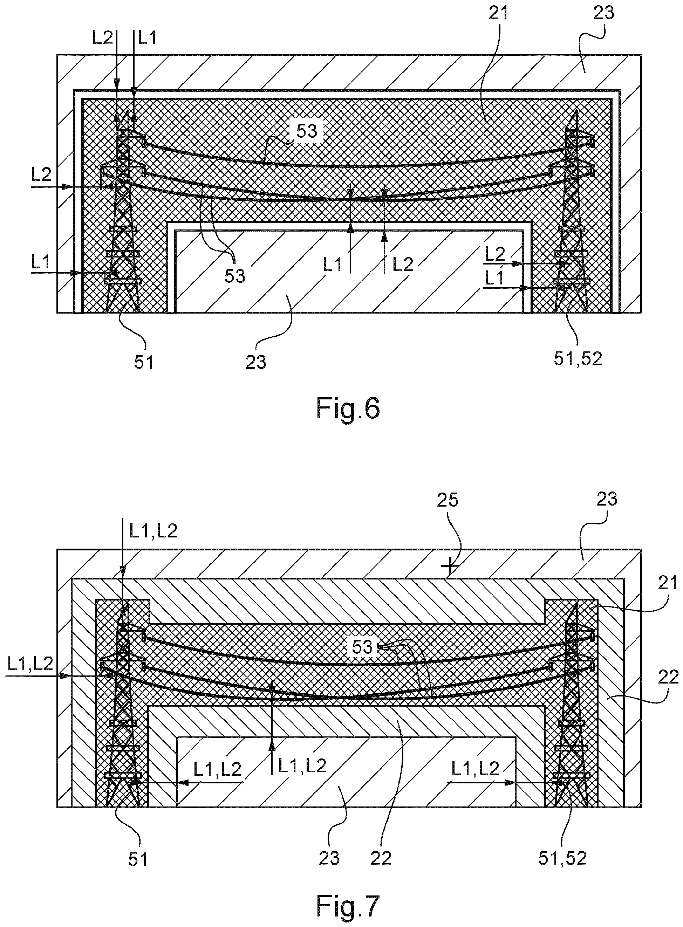

[Fig 6] Selon l'exemple de la figure 6, la zone interdite 21 comporte deux pylônes 51,52 et trois câbles 53 supportés par les deux pylônes 51,52. La zone interdite 21 est donc une zone à éviter lors du vol de l'aéronef 1 de sorte à contourner les deux pylônes 51,52 et les trois câbles 53.

Selon l'exemple de la figure 6, la zone interdite 21 est définie avec une marge de sécurité vis-à-vis de l'enveloppe déterminée lors de la détection et l'identification des pylônes autour de chaque pylône 51,52 et de chaque câble 53. De la sorte, la zone interdite 21 est définie par une première distance de sécurité L1 correspondant à cette marge de sécurité vis à vis de chaque pylône 51,52 et de chaque câble 53. La zone interdite 21 est par exemple formée par trois sous-zones rectangulaires, deux sous-zones associées respectivement à un pylône 51,52 et une sous-zone associée trois câble 53.

La zone interdite 21 peut également suivre plus précisément les formes des deux pylônes 51,52 et des câbles 53, tout en respectant la première distance de sécurité L1 vis à vis de chaque pylône 51,52 et des trois câbles 53.

La zone sécurisée 23 ne comporte pas les deux pylônes 51,52 ni les trois câbles 53 possiblement supporté par lesdits au moins deux pylônes 51,52. La zone sécurisée 23 est donc la zone à privilégier pour un vol sécurisé de l'aéronef 1 afin de contourner les deux pylônes 51,52 et les trois câbles 53.

La zone sécurisée 23 est définie par une seconde distance de sécurité L2 vis à vis de chaque pylône 51 et de chaque câble 53. La zone sécurisée 23 est par exemple formée par deux sous-zones, une sous-zone située à l'extérieur de l'espace formé par les deux pylônes 51,52 et les trois câbles 53 ainsi qu'une sous-zone située entre les deux pylônes 51,52 et en-dessous des câbles 53.

Les zones interdite 21 et sécurisée 23 sont déterminées à partir de caractéristiques dimensionnelles de chaque famille de pylônes issues de la base de données et des distances de sécurité *L1*,*L2* relatives respectivement à la zone interdite 21 et la zone sécurisée 23.

En outre, selon la figure 6, la zone interdite 21 et la zone sécurisée 23 ne sont pas contiguës, la seconde distance de sécurité *L2* étant différente de la première distance de sécurité *L1*.

Les dimensions de la zone interdite 21 sont donc déterminées en fonction de l'enveloppe déterminée lors de la détection et l'identification des pylônes autour de chaque pylône 51,52 et de chaque câble 53 et de la première distance *L1* alors que les dimensions de la zone sécurisée 23 sont déterminées en fonction de la seconde distance *L2*. Les dimensions de l''enveloppe autour de chaque pylône 51,52 et de chaque câble 53 est notamment fonction d'un degré de confiance établie lors de la détection et de l'identification du pylône détecté par rapport à la famille de pylône identifiée. Ce degré de confiance correspond à un pourcentage de certitude sur la reconnaissance de la famille du pylône établi par le processus de reconnaissance d'objets.

La première distance *L1* et la seconde distance *L2* peuvent être déterminées par une méthode de logique floue, désigné également « fuzzy logic » en langue anglaise en fonction de différents critères. Ces critères peuvent être liés à l'aéronef 1 et comprendre par exemple la vitesse d'avancement de l'aéronef 1, la distance entre l'aéronef 1 et un pylône 51,52 ou un câble 53 ou encore le délai avant un possible impact *TBI* de l'aéronef 1 avec un pylône 51,52 ou un câble 53. Un autre critère peut être le degré de confiance sur la détection de chaque pylône 51,52 et de chaque câble 53.

[Fig 7] Sur la figure 7, la zone interdite 21 comporte deux pylônes 51,52 et trois câbles 53 supportés par les deux pylônes 51,52. La zone interdite 21 est définie par l'enveloppe déterminée lors de la détection et l'identification des pylônes autour de chaque pylône 51,52 et de chaque câble 53, donc sans marge de sécurité vis-à-vis de cette enveloppe. La zone interdite 21 est donc une zone à éviter absolument lors du vol de l'aéronef 1 de sorte à contourner les deux pylônes 51,52 et les trois câbles 53.

La zone interdite 21 est par exemple formée par trois sous-zones rectangulaires, deux sous-zones associées respectivement à un pylône 51,52 et une sous-zone associée trois câble 53.

Une zone de sécurité 22 peut alors être déterminée lors de l'étape de détermination afin de prendre en compte une marge de sécurité vis-à-vis de la zone interdite 21, et donc de chaque pylône 51,52 et de chaque câble 53. La zone de sécurité 22 est définie par une première distance de sécurité *L1* correspondant à cette marge de sécurité vis à vis de la zone interdite 21, et donc de chaque pylône 51,52 et de chaque câble 53.

En conséquence, la zone interdite 21 et la zone de sécurité 22 sont contiguës. La zone de sécurité 22 est donc également une zone à éviter lors du vol de l'aéronef 1 de sorte à contourner avec une marge de sécurité suffisante les deux pylônes 51,52 et les trois câbles 53.

La zone sécurisée 23 est définie comme pour l'exemple de la figure 6 par une seconde distance de sécurité *L2* vis à vis de chaque pylône 51 et de chaque câble 53. De la sorte, la zone sécurisée 23 est définie par la seconde distance de sécurité *L2* vis à vis de la zone interdite 21 et ne comporte donc pas les deux pylônes 51,52 ni les trois câbles 53 possiblement supporté par lesdits au moins deux pylônes 51,52. La zone sécurisée 23 est donc la zone à privilégier pour un vol sécurisé de l'aéronef 1 afin de contourner les deux pylônes 51,52 et les trois câbles 53.

La zone sécurisée 23 est par exemple formée par deux sous-zones, une sous-zone située à l'extérieur de l'espace formé par les deux pylônes 51,52 et les trois câbles 53 ainsi qu'une sous-zone située entre les deux pylônes 51,52 et en-dessous des câbles 53.

En outre, la zone de sécurité 22 et la zone sécurisée 23 sont contiguës, la seconde distance de sécurité *L2* étant selon la figure 7, égale à la première distance de sécurité *L1*.

Les dimensions de la zone interdite 21 correspondant aux dimensions de l'enveloppe autour de chaque pylône 51,52 et de chaque câble 53 sont déterminées en fonction du degré de confiance établie lors de la détection et de l'identification du pylône détecté. Les dimensions des zones de sécurité 22 et sécurisée 23 sont déterminées en fonction de la première distance *L1* et de la seconde distance *L2*.

La première distance *L1* et la seconde distance *L2* peuvent être déterminées comme précédemment par une méthode de logique floue, en fonction des différents critères précédemment énoncés.

Le procédé de détection d'obstacles filaires peut également comporter une étape d'affichage des zones interdite 21 et sécurisée 23 sur le dispositif de visualisation 17. La zone de sécurité 22 peut également le cas échéant être affichée sur le dispositif de visualisation 17. De la sorte, un opérateur, par exemple un pilote de l'aéronef 1, est informé de la présence potentiel d'au moins un câble et d'au moins un pylône dans l'environnement de l'aéronef 1 et peut visualiser la zone interdite 21 et la zone sécurisée 23. Les zones interdite 21, de sécurité 22 et sécurisée 23 peuvent être affichées de façon superposée à une image du paysage extérieur à l'aéronef 1 sur le dispositif de visualisation 17.

La zone interdite 21 peut être affichée sur le dispositif de visualisation 17 par exemple avec la couleur rouge pour indiquer au pilote de l'aéronef 1 qu'il doit éviter cette zone interdite 21. La zone sécurisée 23 peut quant à elle être affichée sur le dispositif de visualisation 17 avec la couleur verte pour indiquer au pilote de l'aéronef 1 que la zone sécurisée 23 est sûre. La zone de sécurité 22 peut le cas échéant être affichée avec une couleur orange par exemple pour indiquer au pilote que, même si elle ne comporte a priori ni pylône 51,52, ni câble 53, la zone de sécurité 22 est à éviter tout de même.

Il est également possible d'afficher les zones interdite 21, de sécurité 22 et sécurisée 23 avec des niveaux de transparence différents en superposition de l'image du paysage extérieur à l'aéronef 1 afin d'indiquer le niveau de risque attaché à chacune desdites zones 21,22,23. La zone interdite 21 peut par exemple être affichée sur le dispositif de visualisation 17 de façon totalement opaque afin d'indiquer au pilote qu'il doit éviter cette zone interdite 21. La zone sécurisée 23 peut quant à elle être affichée sur le dispositif de visualisation 17 de façon totalement transparente et la zone de sécurité 22 peut le cas échéant être affichée de façon partiellement opaque, typiquement avec une transparence de 50%.

De plus, des modèles de pylônes et de câbles peuvent être affichés de façon superposé à l'image du paysage extérieur à l'aéronef 1 afin d'indiquer la localisation des pylônes 51,52 et des câbles 53.

Il est également possible d'afficher sur une première partie du dispositif de visualisation 17 l'image du paysage extérieur à l'aéronef 1 sans modification de cette image et sur une seconde partie du dispositif de visualisation 17 l'image du paysage extérieur à l'aéronef 1 avec traitement de cette image, en affichant en particulier les zones interdite 21, de sécurité 22 et sécurisée 23 éventuellement avec des niveaux de transparence différents. De la sorte, le pilote visualise immédiatement la position des pylônes 51,52 et des câbles 53, et donc des zones de danger.

Ces affichages différentiés peuvent être affichés sur deux dispositifs de visualisation 17 distincts en lieu et place de deux parties d'un même dispositif de visualisation.

Le procédé selon l'invention peut également comporter une étape d'estimation et d'affichage d'une position prédite de l'aéronef 1 vis-à-vis des zones interdite 21, de sécurité 22 et sécurisée 23 sur le dispositif de visualisation 17. Cette position prédite de l'aéronef 1 est estimée en fonction de sa trajectoire courante et est affichée sous la forme d'une croix 25 par exemple comme représenté sur la figure 7, bien que d'autres formes puissent être utilisées. Cette position prédite de l'aéronef 1 permet au pilote de visualiser sa trajectoire vis-à-vis des zones interdite 21, de sécurité 22 et sécurisée 23.

Le procédé peut comporter une étape supplémentaire d'évolution des dimensions des zones interdite 21, de sécurité 22 et sécurisée 23. Lors de cette étape supplémentaire d'évolution des zones interdite 21, de sécurité 22 et sécurisée 23, les dimensions des zones de sécurité 22 et sécurisée 23 peuvent être modifiées en modifiant par exemple les valeurs des première et seconde distances de sécurité *L1*,*L2*. Les valeurs des première et seconde distances de sécurité *L1*,*L2* peuvent évoluées selon une méthode de logique floue, en fonction des différents critères précédemment énoncés.

Par exemple, lorsque la vitesse de l'aéronef 1 augmente ou bien lorsque le degré de confiance sur la détection d'un obstacle diminue, la marge de sécurité prise par rapport à chaque pylône 51,52 et/ou chaque câble 53 peut par exemple être augmentée et, par suite, les valeurs des première et seconde distances de sécurité *L1*,*L2* peuvent être augmentées également.

Les dimensions de la zone interdite 21 peuvent quant à elles être modifiées en fonction des dimensions de l'enveloppe déterminée lors de la détection et l'identification des pylônes autour de chaque pylône 51,52 et de chaque câble 53, et donc du degré de confiance dans la détection et l'identification des pylônes.

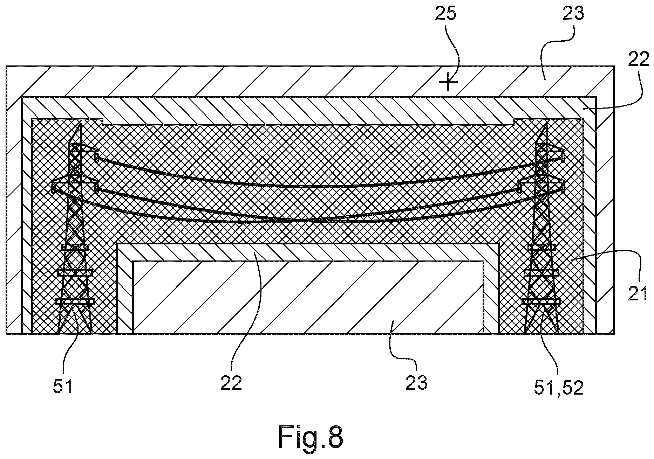

[Fig 8] La représentation des zones interdite 21, de sécurité 22 et sécurisée 23 représentée sur la figure 8 montre par exemple une évolution des dimensions des zones interdite 21, de sécurité 22 et sécurisée 23 vis-à-vis de la figure 7 suite à une baisse du degré de confiance et une baisse des première et seconde distances de sécurité *L1*,*L2*.

Chaque critère intervenant dans l'évolution des zones interdite 21, de sécurité 22 et sécurisée 23 peut être pris en compte individuellement et indépendamment afin de faire évoluer les dimensions de ces zones 21,22,23 selon par exemple des lois d'évolution des première et seconde distances de sécurité *L1*,*L2*. Ces critères peuvent également être combinés entre eux par exemple selon une matrice de décision, afin de régir l'évolution des dimensions des zones interdite 21 et sécurisée 23.

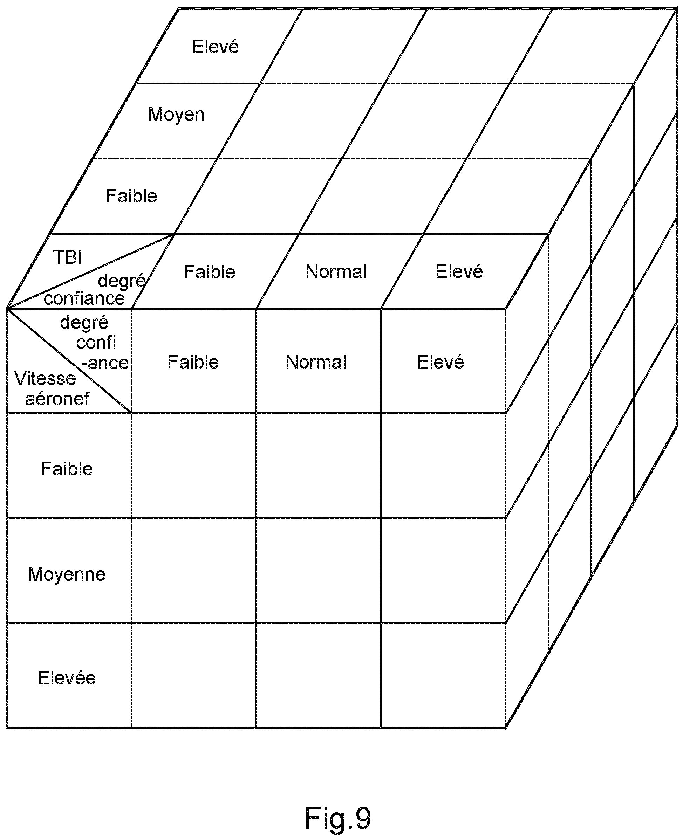

[Fig 9] Une telle matrice de décision est représentée sur la figure 9. La matrice de décision représentée fait intervenir trois critères et représente un cube. Chaque case de la matrice de décision est par exemple associée à un intervalle de valeurs pour chaque critère et peut comporter une loi d'évolution de la zone interdite 21, de la zone sécurisée 23 et de la zone de sécurité 22 le cas échéant.

Par exemple, pour le critère relatif à la vitesse d'avancement de l'aéronef 1, trois intervalles peuvent être définis correspondant respectivement à une faible vitesse, à une vitesse moyenne et à une vitesse élevée. De même, pour le critère relatif au degré de confiance sur la détection d'un pylône 51,52 et d'un câble 53, trois intervalles peuvent également être définis correspondant respectivement à un faible degré de confiance, à un degré de confiance normal et à un degré de confiance élevé. Pour le critère relatif au délai avant un possible impact *TBI*, trois intervalles peuvent être définis correspondant respectivement à un faible délai, à un délai moyen et à un délai élevé.

Ces lois d'évolution permettent de faire évoluer en temps réel les dimensions de la zone interdite 21, de la zone sécurisée 23 et de la zone de sécurité 22 le cas échéant, par des variations des dimensions de l'enveloppe autour de chaque pylône 51,52 et de chaque câble 53 ainsi que des première et seconde distances de sécurité *L1*,*L2*.

Une loi d'évolution peut par exemple définir un premier pourcentage d'augmentation de la zone interdite 21, un deuxième pourcentage de réduction de la zone de sécurité 22 et un troisième pourcentage de réduction de la zone sécurisée 23. Une loi d'évolution peut par exemple définir un premier pourcentage d'augmentation des dimensions de l'enveloppe autour de chaque pylône 51,52 et de chaque câble 53, un deuxième pourcentage de réduction de la première distance de sécurité *L1* et un troisième pourcentage de réduction de la seconde distance de sécurité *L2*.

La case de la matrice de décision à appliquer à un instant donné peut par exemple être choisie par l'application d'une méthode de logique floue appliquée aux différents critères. Au cours du vol de l'aéronef 1 et de son rapprochement avec un pylône 51 détecté, de nouvelles cases de la matrice de décision sont à appliquer successivement afin que les dimensions de la zone interdite 21, de la zone de sécurité 22 le cas échéant et de la zone sécurisée 23 évoluent.

La zone interdite 21, la zone sécurisée 23 et le cas échéant la zone de sécurité 22 sont fournies au calculateur 15 et éventuellement au pilote automatique 9 dans le cas d'un vol automatique de l'aéronef 1. Un ensemble de trajectoires possibles de l'aéronef 1 avec plus ou moins de risques et/ou avec plus ou moins de rapprochement des limites de puissances et ou structurelle de l'aéronef 1 peuvent alors être déterminées. Dès lors, le procédé peut fournir une nouvelle trajectoire à suivre pour éviter les obstacles, cette nouvelle trajectoire étant définie comme étant la meilleure parmi l'ensemble de trajectoires possibles. Ces trajectoires possibles peuvent être déterminé à l'aide d'algorithmes connus de type « A* » ou « A* dynamique » et le choix de la trajectoire retenue est fait avec des algorithmes décisionnels connus, par exemple des algorithmes évolutionniste et/ou génétique.

Le procédé peut aussi fournir une nouvelle consigne de vitesse d'avancement de l'aéronef 1.

En outre, les choix de trajectoires peuvent être aussi appris, soit en vol réel soit en simulation afin de pouvoir, avec moins de latences au fur et à mesure de l'expérience et de l'apprentissage, choisir la meilleure trajectoire en fonction de plusieurs paramètres, à savoir le temps de décision, l'excursion par rapport au corridor, les limites de vol de l'aéronef 1 et le respect de la charge utile transportée par l'aéronef 1.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de détection d'obstacles filaires destiné à un aéronef (1), ledit aéronef (1) comportant au moins un dispositif de détection (11),
**caractérisé en ce que** ledit procédé comporte les étapes suivantes :
- détection d'au moins un pylône (51) dans l'environnement dudit aéronef (1) par l'intermédiaire d'un dispositif de détection (11),
- identification d'une famille de pylônes à laquelle correspond ledit au moins un pylône (51) détecté parmi une base de données de familles de pylônes,
- caractérisation d'au moins un câble (53) supporté par ledit au moins un pylône (51) détecté, à partir de ladite base de données, et
- détermination d'une zone interdite (21) susceptible de comporter ledit au moins un pylône (51) détecté et ledit au moins un câble (53) et d'une zone sécurisée (23) ne comportant ni ledit au moins un pylône (51) ni ledit au moins un câble (53).

2. Procédé selon la revendication 1,
**caractérisé en ce que** ladite étape de détection d'au moins un pylône (51) dans ledit environnement dudit aéronef (1) comporte les sous-étapes suivantes :
- création d'une image dudit environnement dudit aéronef (1),
- analyse de ladite image dudit environnement dudit aéronef (1), et
- identification d'au moins un pylône (51) contenu dans ladite image dudit environnement.

3. Procédé selon la revendication 2,
**caractérisé en ce que** ladite sous-étape de création d'une image dudit environnement dudit aéronef (1) comporte une étape d'émission d'ondes et une étape de réception desdites ondes renvoyées par un obstacle.

4. Procédé selon la revendication 3,
**caractérisé en ce que** lesdites ondes sont radiophoniques ou lumineuses.

5. Procédé selon l'une quelconque des revendications 2 à 4,
**caractérisé en ce que** ladite sous-étape de création d'une image dudit environnement dudit aéronef (1) comporte une étape de capture optique d'une image dudit environnement.

6. Procédé selon l'une quelconque des revendications 1 à 5,
**caractérisé en ce que** ladite étape d'identification d'une famille de pylônes comporte les sous-étapes suivantes :
- comparaison dudit au moins un pylône (51) détecté dans ladite image avec ladite base de données de familles de pylônes, et
- sélection de ladite famille de pylônes à laquelle correspond ledit au moins un pylône (51) détecté dans ladite image.

7. Procédé selon l'une quelconque des revendications 1 à 6,
**caractérisé en ce que** lors de ladite étape de caractérisation d'au moins un câble (53) supporté par ledit au moins un pylône (51), au moins une caractéristique dudit au moins un câble (53) supporté par ledit au moins un pylône (51) détecté est déterminée à partir de ladite base de données et est une des caractéristiques suivantes :
- une distance entre deux pylônes (51) consécutifs reliés par ledit au moins un câble (53), ledit au moins un pylône (51) détecté comportant lesdits deux pylônes (51),
- une distance entre deux pylônes (51,52) consécutifs reliés par ledit au moins un câble (53), ledit au moins un pylône (51) détecté comportant un seul pylône (51) et un autre pylône (52) non visible dans un champ de détection dudit dispositif de détection (11) étant relié audit pylône (51) détecté par au moins un câble (53), ladite distance entre lesdits deux pylônes (51,52) consécutifs pouvant être estimée à partir de ladite base de données de familles de pylônes,
- un nombre de câbles (53) entre lesdits deux pylônes (51,52) consécutifs,
- une catégorie dudit au moins un câble (53),
- un rayon de courbure dudit au moins un câble (53) entre lesdits deux pylônes (51,52) consécutifs, et
- une hauteur entre un point d'accrochage d'un câble (53) sur un pylône (51,52) et le point le plus bas dudit câble (53).

8. Procédé selon l'une quelconque des revendications 1 à 7,
**caractérisé en ce que** ledit procédé comporte une étape supplémentaire d'estimation d'une position d'au moins un autre pylône (52) par rapport à un pylône détecté (51), ledit au moins un autre pylône étant non détecté lors de ladite étape de détection d'au moins un pylône (51) dans l'environnement dudit aéronef (1).

9. Procédé selon l'une quelconque des revendications 1 à 8,
**caractérisé en ce que** lors de ladite étape de détermination desdites zones interdite (21) et sécurisée (23), ladite zone interdite (21) comporte au moins deux pylônes (51,52) et ledit au moins un câble (53) et est définie avec une première distance de sécurité (*L1*) vis à vis de chaque pylône (51) et dudit au moins un câble (53) alors que ladite zone sécurisée (23) ne comporte pas lesdits au moins deux pylônes (51,52) ni ledit au moins un câble (53) et est définie avec une seconde distance de sécurité (*L2*) vis à vis de chaque pylône (51) et dudit au moins un câble (53).

10. Procédé selon l'une quelconque des revendications 1 à 9,
**caractérisé en ce que** lors de ladite étape de détermination, une zone de sécurité (22) est déterminée, ladite zone interdite (21) comportant au moins deux pylônes (51,52) et ledit au moins un câble (53) ladite zone de sécurité (22) étant définie avec une première distance de sécurité (*L1*) vis à vis de ladite zone interdite (21) et ladite zone sécurisée (23) ne comportant pas lesdits au moins deux pylônes (51,52) ni ledit au moins un câble (53) et étant définie avec une seconde distance de sécurité (*L2*) vis à vis de ladite zone interdite (21).

11. Procédé selon l'une quelconque des revendications 9 à 10,
**caractérisé en ce que** lesdites première et seconde distances de sécurité (L1,L2) sont déterminées par une méthode de logique floue.

12. Procédé selon la revendication 1 à 11,
**caractérisé en ce que** ledit procédé comporte une étape d'affichage desdites zones interdite (21) et sécurisée (23) sur au moins un dispositif de visualisation (17).

13. Procédé selon la revendication 10,
**caractérisé en ce que** ledit procédé comporte une étape d'affichage desdites zones interdite (21), de sécurité (22) et sécurisée (23) sur au moins un dispositif de visualisation (17).

14. Procédé selon l'une quelconque des revendications 12 à 13,
**caractérisé en ce que** lesdites zones interdite (21) et sécurisée (23), et une zone de sécurité (22) le cas échéant, sont affichées avec des niveaux de transparence différents en superposition d'une image d'un paysage extérieur audit aéronef (1) de sorte à indiquer un niveau de risque attaché à chacune desdites zones (21,22,23).

15. Procédé selon l'une quelconque des revendications 12 à 14,
**caractérisé en ce que** lors de ladite étape d'affichage, des modèles de pylônes et de câbles sont affichés de façon superposée à l'image du paysage extérieur à l'aéronef 1 de sorte à indiquer une localisation desdits pylônes (51,52) et desdits câbles (53).

16. Procédé selon l'une quelconque des revendications 12 à 15,
**caractérisé en ce que** ledit procédé comporte une étape supplémentaire d'estimation et d'affichage d'une position prédite dudit aéronef (1) vis-à-vis desdites zones interdite (21) et sécurisée (23), et d'une zone de sécurité (22) le cas échéant, sur au moins un dispositif de visualisation (17).

17. Procédé selon l'une quelconque des revendications 1 à 16,
**caractérisé en ce que** ledit procédé comporte une étape supplémentaire d'évolution desdites zones interdite (21) et sécurisée (23) au cours de laquelle des dimensions des zones interdite (21) et sécurisée (23), et d'une zone de sécurité (22) le cas échéant, sont modifiées en fonction au moins d'un ou plusieurs critères de vol dudit aéronef (1).

18. Procédé selon la revendication 17,
**caractérisé en ce que** lesdites zones interdite (21) et sécurisée (23) évoluent selon au moins un critère parmi :
- une distance entre d'une part ledit aéronef (1) et d'autre part un pylône (51,52) ou un câble (53),
- la vitesse d'avancement dudit aéronef (1),
- un délai avant un possible impact (*TBI*) dudit aéronef (1) avec un pylône (51,52) ou un câble (53), et
- un degré de confiance sur ladite détection dudit au moins un pylône (51) et dudit au moins un câble (53).

19. Procédé selon l'une quelconque des revendications 17 à 18,
**caractérisé en ce que** ladite étape supplémentaire d'évolution desdites zones (21,22,23) utilise une méthode de logique floue et une matrice de décision.

20. Procédé de vol automatique d'un aéronef (1),
**caractérisé en ce que** ledit procédé de vol automatique d'un aéronef (1) utilise ledit procédé de détection d'obstacles filaires destiné à un aéronef (1) selon l'une quelconque des revendications 1 à 19 afin de prendre en compte lesdits d'obstacles filaires détectés.

21. Système de détection (10) d'obstacles filaires destiné à un aéronef (1), ledit système de détection (10) comportant :
- au moins un dispositif de détection (11),
- au moins un calculateur (15), et
- au moins un dispositif de visualisation (17),
**caractérisé en ce que** ledit système de détection (10) est configuré pour mettre en œuvre le procédé selon l'une quelconque des revendications 1 à 20.

22. Système de détection (10) selon la revendication 21,
**caractérisé en ce que** ledit dispositif de détection (11) comporte au moins une caméra optique, un détecteur d'obstacles de type *LIDAR* ou *LEDDAR* ou bien un détecteur d'obstacles de type *RADAR.*

23. Aéronef (1),
**caractérisé en ce que** ledit aéronef (1) comporte un système de détection (10) selon l'une quelconque des revendications 21 à 22.

24. Aéronef (1) selon la revendication 23,
**caractérisé en ce qu'**au moins un dispositif de visualisation (17) est déporté sur une station de pilotage (2) communiquant avec ledit aéronef (1).

25. Ensemble (5) de détection d'un obstacle filaire comportant une station de pilotage (2) et un aéronef (1),
**caractérisé en ce que** ledit ensemble (5) de détection d'un obstacle filaire comporte un système de détection (10) selon l'une quelconque des revendications 21 à 22, ledit aéronef (1) comportant ledit au moins un dispositif de détection (11) et un premier dispositif de communication (3), et ladite station de pilotage (2) comportant ledit au moins un calculateur (15), ledit au moins un dispositif de visualisation (17) et un second dispositif de communication (6), ledit premier dispositif de communication (3) coopérant avec ledit second dispositif de communication (6) afin d'échanger d'une part des informations captées par ledit au moins un dispositif de détection (11) et d'autre part des données de navigation.

## Patentansprüche

1. Verfahren zum Erfassen von drahtförmigen Hindernissen für ein Flugzeug (1), wobei das Flugzeug (1) mindestens eine Erfassungsvorrichtung (11) umfasst, **dadurch gekennzeichnet, dass** das Verfahren die folgenden Schritte umfasst:
- Erfassen mindestens eines Masts (51) in der Umgebung des Flugzeugs (1) mittels einer Erfassungsvorrichtung (11),
- Identifizieren einer Familie von Masten, zu der der mindestens eine erfasste Mast (51) gehört, in einer Datenbank von Familien von Masten,
- Charakterisieren mindestens eines von dem mindestens einen erfassten Mast (51) getragenen Kabels (53) anhand der Datenbank und
- Bestimmen einer verbotenen Zone (21), die den mindestens einen erfassten Mast (51) und das mindestens eine Kabel (53) enthalten kann, und einer gesicherten Zone (23), die weder den mindestens einen Mast (51) noch das mindestens eine Kabel (53) enthält.

2. Verfahren nach Anspruch 1,
**dadurch gekennzeichnet, dass** der Schritt des Erfassens mindestens eines Mastes (51) in der Umgebung des Flugzeugs (1) die folgenden Teilschritte umfasst:
- Erstellen eines Bildes der Umgebung des Flugzeugs (1),
- Analysieren des Bildes der Umgebung des Flugzeugs (1), und
- Identifizieren mindestens eines im Bild der Umgebung enthaltenen Masts (51).

3. Verfahren nach Anspruch 2,
**dadurch gekennzeichnet, dass** der Teilschritt des Erzeugens eines Bildes der Umgebung des Flugzeugs (1) einen Schritt des Aussendens von Wellen und einen Schritt des Empfangens der von einem Hindernis zurückgeworfenen Wellen umfasst.

4. Verfahren nach Anspruch 3,
**dadurch gekennzeichnet, dass** die Wellen Radio- oder Lichtwellen sind.

5. Verfahren nach einem der Ansprüche 2 bis 4,
**dadurch gekennzeichnet, dass** der Teilschritt des Erzeugens eines Bildes der Umgebung des Flugzeugs (1) einen Schritt des optischen Erfassens eines Bildes der Umgebung umfasst.

6. Verfahren nach einem der Ansprüche 1 bis 5,
**dadurch gekennzeichnet, dass** der Schritt des Identifizierens einer Familie von Masten die folgenden Teilschritte umfasst:
- Vergleichen des mindestens einen in dem Bild erfassten Mastes (51) mit der Datenbank von Familien von Masten, und
- Auswählen der Familie von Masten, zu der der mindestens eine im Bild erfasste Mast (51) gehört.

7. Verfahren nach einem der Ansprüche 1 bis 6,
**dadurch gekennzeichnet, dass** in dem Schritt des Charakterisierens mindestens eines von dem mindestens einen erfassten Mast (51) getragenen Kabels (53) mindestens ein Merkmal des mindestens einen von dem mindestens einen Mast (51) getragenen Kabels (53) aus der Datenbank bestimmt wird und eines der folgenden Merkmale ist:
- ein Abstand zwischen zwei aufeinanderfolgenden Masten (51), die durch das mindestens eine Kabel (53) verbunden sind, wobei der mindestens eine erfasste Mast (51) die beiden Masten (51) umfasst,
- ein Abstand zwischen zwei aufeinanderfolgenden Masten (51, 52), die durch das mindestens eine Kabel (53) verbunden sind, wobei der mindestens eine erfasste Mast (51) einen einzelnen Mast (51) und einen anderen, in einem Erfassungsfeld der Erfassungsvorrichtung (11) nicht sichtbaren Mast (52) umfasst, der mit dem erfassten Mast (51) durch mindestens ein Kabel (53) verbunden ist, wobei der Abstand zwischen den beiden aufeinanderfolgenden Masten (51, 52) aus der Datenbank der Familien von Masten abschätzbar ist,
- eine Anzahl von Kabeln (53) zwischen den beiden aufeinanderfolgenden Masten (51, 52)
- eine Kategorie des mindestens einen Kabels (53),
- ein Biegeradius des mindestens einen Kabels (53) zwischen den beiden aufeinanderfolgenden Masten (51, 52), und
- eine Höhe zwischen einem Befestigungspunkt eines Kabels (53) an einem Mast (51, 52) und dem tiefsten Punkt des Kabels (53).

8. Verfahren nach einem der Ansprüche 1 bis 7,
**dadurch gekennzeichnet, dass** das Verfahren einen zusätzlichen Schritt des Schätzens einer Position von mindestens einem anderen Mast (52) in Bezug auf einen erfassten Mast (51) umfasst, wobei der mindestens eine andere Mast während des Schritts des Erfassens mindestens eines Masts (51) in der Umgebung des Flugzeugs (1) unerfasst geblieben ist.

9. Verfahren nach einem der Ansprüche 1 bis 8,
**dadurch gekennzeichnet, dass** in dem Schritt des Bestimmens der verbotenen (21) und der sicheren (23) Zone die verbotene Zone (21) mindestens zwei Masten (51, 52) und das mindestens eine Kabel (53) umfasst und mit einem ersten Sicherheitsabstand (L1) in Bezug auf jeden Mast (51) und das mindestens eine Kabel (53) definiert ist, während die sichere Zone (23) die mindestens zwei Masten (51, 52) und das mindestens eine Kabel (53) nicht enthält und mit einem zweiten Sicherheitsabstand (L2) in Bezug auf jeden Mast (51) und das mindestens eine Kabel (53) definiert ist.

10. Verfahren nach einem der Ansprüche 1 bis 9,
**dadurch gekennzeichnet, dass** in dem Schritt des Bestimmens eine Sicherheitszone (22) bestimmt wird, wobei die verbotene Zone (21) mindestens zwei Masten (51, 52) und das mindestens eine Kabel (53) enthält und die Sicherheitszone (22) mit einem ersten Sicherheitsabstand (L1) in Bezug auf die verbotene Zone (21) definiert ist und die sichere Zone (23) die mindestens zwei Masten (51, 52) und das mindestens eine Kabel (53) nicht enthält und mit einem zweiten Sicherheitsabstand (L2) in Bezug auf die verbotene Zone (21) definiert ist.

11. Verfahren nach einem der Ansprüche 9 bis 10,
**dadurch gekennzeichnet, dass** der erste und zweite Sicherheitsabstand (L1, L2) durch ein Fuzzy-Logik-Verfahren bestimmt werden.

12. Verfahren nach einem der Ansprüche 1 bis 11,
**dadurch gekennzeichnet, dass** das Verfahren einen Schritt des Anzeigens der verbotenen (21) und der sicheren (23) Zone auf mindestens einer Anzeigevorrichtung (17) umfasst.

13. Verfahren nach Anspruch 10,
**dadurch gekennzeichnet, dass** das Verfahren einen Schritt des Anzeigens der verbotenen Zone (21), der Sicherheitszone (22) und der sicheren Zone (23) auf mindestens einer Anzeigevorrichtung (17) umfasst.

14. Verfahren nach einem der Ansprüche 12 bis 13,
**dadurch gekennzeichnet, dass** die verbotene (21) und die sichere (23) Zone und gegebenenfalls eine Sicherheitszone (22) mit unterschiedlichen Transparenzgraden einem Bild einer Landschaft außerhalb des Flugzeugs (1) überlagert angezeigt werden, um einen Risikograd anzuzeigen, der mit jeder der Zonen (21, 22, 23) verbunden ist.

15. Verfahren nach einem der Ansprüche 12 bis 14,
**dadurch gekennzeichnet, dass** in dem genannten Schritt des Anzeigens dem Bild der Landschaft außerhalb des Flugzeugs (1) überlagerte Modelle von Masten und Kabeln angezeigt werden, um einen Standort der genannten Masten (51, 52) und der genannten Kabel (53) anzuzeigen.

16. Verfahren nach einem der Ansprüche 12 bis 15,
**dadurch gekennzeichnet, dass** das Verfahren einen weiteren Schritt des Schätzens und Anzeigens einer vorhergesagten Position des Flugzeugs (1) in Bezug auf die verbotene (21) und die sichere (23) Zone und gegebenenfalls eine Sicherheitszone (22) auf mindestens einer Anzeigevorrichtung (17) umfasst.

17. Verfahren nach einem der Ansprüche 1 bis 16,
**dadurch gekennzeichnet, dass** das Verfahren einen weiteren Schritt des Entwickelns der verbotenen (21) und der sicheren (23) Zone umfasst, bei dem die Abmessungen der verbotenen (21) und der sicheren (23) Zone und, falls anwendbar, einer Sicherheitszone (22) gemäß mindestens einem oder mehreren Flugkriterien des Flugzeugs (1) modifiziert werden.

18. Verfahren nach Anspruch 17,
**dadurch gekennzeichnet, dass** sich die verbotene (21) und die sichere (23) Zonen in Abhängigkeit von mindestens einem der folgenden Kriterien entwickeln:
- einem Abstand zwischen dem Flugzeug (1) einerseits und einem Mast (51, 52) oder einem Kabel (53) andererseits,
- der Vorwärtsgeschwindigkeit des Luftfahrzeugs (1),
- einer Verzögerung vor einem möglichen Aufprall (TBI) des Flugzeugs (1) auf einen Mast (51, 52) oder ein Kabel (53), und
- einem Grad des Vertrauens in die Erfassung des mindestens einen Mastes (51) und des mindestens einen Kabels (53).

19. Verfahren nach einem der Ansprüche 17 bis 18,
**dadurch gekennzeichnet, dass** der weitere Schritt des Entwickelns der Zonen (21, 22, 23) ein Fuzzy-Logik-Verfahren und eine Entscheidungsmatrix verwendet.

20. Verfahren zum automatischen Fliegen eines Flugzeugs (1),
**dadurch gekennzeichnet, dass** das Verfahren zum automatischen Fliegen eines Flugzeugs (1) das Verfahren zum Erfassen von drahtförmigen Hindernissen für ein Flugzeug (1) nach einem der Ansprüche 1 bis 19 verwendet, um die erkannten drahtförmigen Hindernisse zu berücksichtigen.

21. System (10) zum Erfassen von drahtförmigen Hindernissen für ein Flugzeug (1), wobei das Erfassungssystem (10) umfasst:
- mindestens eine Erfassungsvorrichtung (11),
- mindestens einen Rechner (15), und
- mindestens eine Anzeigevorrichtung (17),
**dadurch gekennzeichnet, dass** das Erfassungssystem (10) konfiguriert ist, das Verfahren nach einem der Ansprüche 1 bis 20 durchzuführen.

22. Erfassungssystem (10) nach Anspruch 21,
**dadurch gekennzeichnet, dass** die Erfassungsvorrichtung (11) mindestens eine optische Kamera, einen Hindernisdetektor vom Typ LIDAR oder LEDDAR oder einen Hindernisdetektor vom Typ RADAR umfasst.

23. Flugzeug (1),
**dadurch gekennzeichnet, dass** das Flugzeug (1) ein Erfassungssystem (10) nach einem der Ansprüche 21 bis 22 umfasst.

24. Flugzeug (1) nach Anspruch 23,
**dadurch gekennzeichnet, dass** mindestens eine Anzeigevorrichtung (17) in eine mit dem Flugzeug (1) kommunizierende Lotsenstation (2) integriert ist.

25. Anordnung (5) zur Erfassung von drahtförmigen Hindernissen mit einer Lotsenstation (2) und einem Flugzeug (1),
**dadurch gekennzeichnet, dass** die Anordnung (5) zum Erfassen eines drahtförmigen Hindernisses ein Erfassungssystem (10) nach einem der Ansprüche 21 bis 22 umfasst, wobei das Flugzeug (1) die mindestens eine Erfassungsvorrichtung (11) und eine erste Kommunikationsvorrichtung (3) umfasst, und die Lotsenstation (2) den mindestens einen Rechner (15), die mindestens eine Anzeigevorrichtung (17) und eine zweite Kommunikationsvorrichtung (6) umfasst, wobei die erste Kommunikationsvorrichtung (3) mit der zweiten Kommunikationsvorrichtung (6) zusammenwirkt, um einerseits die von der mindestens einen Erfassungsvorrichtung (11) erfassten Informationen und andererseits Navigationsdaten auszutauschen.

## Claims

1. Method for the detection of wired obstacles intended for an aircraft (1), said aircraft (1) comprising at least one detection device (11),
**characterised in that** said method consists of the following steps:
- detection of at least one pylon (51) in the surroundings of said aircraft (1) by means of a detection device (11),
- identification of a family of pylons to which said at least one detected pylon (51) corresponds from a database of families of pylons,
- characterisation of at least one cable (53) supported by said at least one detected pylon (51) from said database and
- determination of a prohibited zone (21) that is likely to contain said at least one detected pylon (51) and said at least one cable (53) and a safe zone (23) which does not contain either said at least one pylon (51) or said at least one cable (53).

2. Method according to Claim 1,
**characterised in that** said detection step of at least one pylon (51) in said surroundings of said aircraft (1) consists of the following sub-steps:
- creation of an image of said surroundings of said aircraft (1),
- analysis of said image of said surroundings of said aircraft (1), and
- identification of at least one pylon (51) contained in said image of said surroundings.

3. Method according to Claim 2,
**characterised in that** said sub-step of the creation of an image of said surroundings of said aircraft (1) consists of a wave emission step and a step in which said waves returned by an obstacle are received.

4. Method according to Claim 3,
**characterised in that** said waves are radio or light waves.

5. Method according to any one of Claims 2 to 4,
**characterised in that** said sub-step of the creation of an image of said surroundings of said aircraft (1) consists of a step of visual capture of an image of said surroundings.

6. Method according to any one of Claims 1 to 5,
**characterised in that** said step of identification of a family of pylons consists of the following sub-steps:
- comparison of said at least one detected pylon (51) in said image with said database of families of pylons, and
- selection of said family of pylons to which said at least one detected pylon (51) in said image corresponds.

7. Method according to any one of Claims 1 to 6,
**characterised in that** during said characterisation step of the at least one cable (53) supported by said at least one pylon (51), at least one characteristic of said at least one cable (53) supported by said at least one detected pylon (51) is determined from the database and is one of the following characteristics:
- a distance between two consecutive pylons (51) linked by said at least one cable (53), said at least one detected pylon (51) comprising said two pylons (51),
- a distance between two consecutive pylons (51, 52) linked by said at least one cable (53), said at least one detected pylon (51) comprising a single pylon (51) and another pylon (52) which is not visible in a field of detection of said detection device (11) being linked to said detected pylon (51) by at least one cable (53), said distance between said two consecutive pylons (51, 52) being able to be estimated from said database of families of pylons,
- a number of cables (53) between said two consecutive pylons (51,52), a category of said at least one cable (53),
- a category of the at least one cable (53);
- a radius of curvature of said at least one cable (53) between said two consecutive pylons (51, 52), and
- a height between a hanging point of a cable (53) on a pylon (51, 52) and the lowest point of said cable (53).

8. Method according to any one of Claims 1 to 7,
**characterised in that** said method consists of an additional step of estimating a position of at least one other pylon (52) based on a detected pylon (51), said at least one other pylon not being detected during said detection step of at least one pylon (51) in the surroundings of said aircraft (1).

9. Method according to any one of Claims 1 to 8,
**characterised in that** during said determination step of said prohibited (21) and safe (23) zones, said prohibited zone (21) comprising at least two pylons (51, 52) and said at least one cable (53) being defined with a first safety distance *(L1)* relative to each pylon (51) and said at least one cable (53), so said safe zone (23) does not comprise said at least two pylons (51, 52) or said at least one cable (53) and is defined with a second safety distance *(L2)* relative to each pylon (51) and to said at least one cable (53).

10. Method according to any one of Claims 1 to 9,
**characterised in that** during said determination step, a safety zone (22) is determined, said prohibited zone (21) comprising at least two pylons (51, 52) and said at least one cable (53), said safety zone (22) being defined with a first safety distance *(L1)* relative to said prohibited zone (21) and said safe zone (23) do not comprise said at least two pylons (51, 52) or said at least one cable (53) and being defined with a second safety distance *(L2)* relative to said prohibited zone (21).

11. Method according to any one of Claims 9 to 10,
**characterised in that** said first and second safety distances (LI, L2) are determined using a fuzzy logic method.

12. Method according to any one of Claims 1 to 11,
**characterised in that** said method consists of a step of displaying said prohibited (21) and safe zones (23) on at least one visualisation device (17).

13. Method according to Claim 10,
**characterised in that** said method consists of a step of displaying said prohibited (21), safety (22) and safe zones (23) on at least one visualisation device (17).

14. Method according to any one of Claims 12 to 13,
**characterised in that** said prohibited (21) and safe zones (23) and a safety zone (22) are, if necessary, displayed with different levels of transparency superimposed on an image of the external landscape of said aircraft (1) in order to indicate the level of risk attached to each of said zones (21, 22, 23).

15. Method according to any one of Claims 12 to 14,
**characterised in that** during said display step, the models of the pylons and cables are displayed in a superimposed manner on the image of the external landscape of the aircraft (1) in order to indicate a location of said pylons (51, 52) and said cables (53).

16. Method according to any one of Claims 12 to 15,
**characterised in that** said method comprises an additional step of estimating the display of a predicted position of said aircraft (1) relative to said prohibited (21) and safe zones (23), and to a safety zone (22) if necessary on at least one visualisation device (17).

17. Method according to any one of Claims 1 to 16,
**characterised in that** said method comprises an additional step of progression of said prohibited (21) and safe zones (23) during the course of which the dimensions of the prohibited (21) and safe zones (23) and a safety zone (22) if necessary are modified as a function of at least one or several flying criteria of said aircraft (1).

18. Method according to Claim 17,
**characterised in that** said prohibited (21) and safe zones (23) progress according to at least one of the following criteria:
- a distance between said aircraft (1) on the one hand and a pylon (51, 52) or a cable (53) on the other hand,
- the travel speed of said aircraft (1)
- a time before a possible impact *(TBI)* of said aircraft (1) with a pylon (51, 52) or a cable (53), and
- a degree of confidence of said detection of said at least one pylon (51) and said at least one cable (53).

19. Method according to any one of Claims 17 to 18,
**characterised in that** said additional step of progression of said zones (21, 22, 23) uses a fuzzy logic method and a decision matrix.

20. Method for automatic flight of an aircraft (1),
**characterised in that** said automatic flight method of an aircraft (1) uses said method of detecting wired objects intended for an aircraft (1) according to any one of Claims 1 to 19 to take into account said detected wired obstacles.

21. Detection system (10) of wired obstacles intended for an aircraft (1), said detection system (10) comprising:
- at least one detection device (11),
- at least one calculator (15), and
- at least one visualisation device (17),
**characterised in that** said detection system (10) is configured to implement the method according to any one of Claims 1 to 20.

22. Detection system (10) according to Claim 21,
**characterised in that** said detection device (11) comprises at least one optical camera, a *LIDAR-type* or *LEDDAR-type* obstacle detector or a RADAR-type obstacle detector.

23. Aircraft (1),
**characterised in that** said aircraft (1) comprises a detection system (10) according to any one of Claims 21 to 22.

24. Aircraft (1) according to Claim 23,
**characterised in that** at least one visualisation device (17) is offset to a pilot station (2) which communicates with said aircraft (1).

25. Assembly (5) for the detection of a wired obstacle comprising a pilot station (2) and an aircraft (1),
**characterised in that** said assembly (5) for the detection of a wired obstacle comprises a detection system (10) according to any one of Claims 21 to 22, said aircraft (1) comprising said at least one detection device (11) and a first communication device (3) and said pilot station (2) comprising said at least one calculator (15), said at least one visualisation device (17) and a second communication device (6), said first communication device (3) cooperating with said second communication device (6) to exchange on the one hand the information recorded by said at least one detection device (11) and on the other hand the navigation data.
